(19) **Europäisches Patentamt**
**European Patent Office**
**Office européen des brevets**

(11) Veröffentlichungsnummer : **0 049 489
B1**

(12) # EUROPÄISCHE PATENTSCHRIFT

(45) Veröffentlichungstag der Patentschrift :
05.06.85

(21) Anmeldenummer : 81107824.5

(22) Anmeldetag : 01.10.81

(51) Int. Cl.⁴ : **B 23 K 1/12, B 23 K 1/20**

(54) Verfahren zur Herstellung einer Trägermatrix für einen Abgaskatalysator.

(30) Priorität : 07.10.80 DE 3037796

(43) Veröffentlichungstag der Anmeldung :
14.04.82 Patentblatt 82/15

(45) Bekanntmachung des Hinweises auf die Patenterteilung : 05.06.85 Patentblatt 85/23

(84) Benannte Vertragsstaaten :
AT BE CH DE FR GB IT LI LU NL SE

(56) Entgegenhaltungen :
DE-A- 2 302 746
DE-A- 2 924 592
FR-A- 2 215 287
FR-A- 2 460 174
FR-A- 2 460 175
GB-A- 1 334 683
US-A- 3 960 305

(73) Patentinhaber : INTERATOM Gesellschaft mit beschränkter Haftung
Friedrich-Ebert-Strasse
D-5060 Bergisch Gladbach 1 (DE)

(72) Erfinder : Cyron, Theo
Hüttenfeld 1
D-5060 Bergisch Gladbach 3 (DE)
Erfinder : Iversen, Klaus
Sperberweg 15
D-5067 Kürten-Bechen (DE)
Erfinder : Lohe, Johannes
Alter Trassweg 42
D-5060 Bergisch Gladbach 3 (DE)

(74) Vertreter : Mehl, Ernst, Dipl.-Ing. et al
Postfach 22 01 76
D-8000 München 22 (DE)

## Beschreibung

Die vorliegende Erfindung betrifft ein Verfahren zur Herstellung einer Trägermatrix für einen Abgaskatalysator nach dem Oberbegriff des Anspruchs.

Beim Löten von sehr dünnen Blechen mit einer Wandstärke von 0,04 mm oder noch weniger traten bisher Schwierigkeiten auf, weil die üblichen Lötpasten in einem Bindemittel Lötkörner enthalten, deren Durchmesser üblicherweise 0,01 bis 0,1 mm beträgt, und die aufgetragene Schicht der Lötpaste zwangsläufig wesentlich dicker ist als der angegebene größte Durchmesser der Lötkörner. Im Bereich der zu verlötenden Flächen ist daher ein erheblicher Überschuß an Lötwerkstoff vorhanden. Es kommt daher durch Diffusion zum Auflegieren der wesentlich geringeren Werkstoffmenge des Bleches mit der bedeutend größeren Menge des Lötmaterials an der Lötstelle, wodurch die mengenmäßig geringeren Anteile des Blechwerkstoffes sich in der mengenmäßig größeren Lötschmelze lösen und zum Ausschmelzen des dünnwandigen Bleches führen. Insbesondere bei Anhäufung mehrerer dicker Lötkörner entstehen dann im dünnwandigen Blech Löcher, die naturgemäß die örtliche Festigkeit erheblich stören. Auch wenn man die üblichen Lötpasten sehr sorgfältig und nur in einer sehr dünnen Schicht auftragen würde, so läßt sich doch nicht vermeiden, daß an Blechkanten oder in Ecken und Spalten größere Mengen an Lötpaste zurückbleiben, die ebenfalls das bereits erwähnte Schmelzen des dünnwandigen Bleches und damit Löcher an den Lötstellen bewirken, anstatt wie beabsichtigt, diese Bleche miteinander zu verbinden.

Aus der DE-A-23 02 746 ist bereits ein Verfahren zur Herstellung einer Trägermatrix für einen Abgaskatalysator bekannt, welche aus hochtemperaturfesten Stahlblechen gebildet wird, wobei die Stahlbleche als glatte und gewellte Bleche ausgebildet und lagenweise abwechselnd angeordnet sind und wobei vor dem abwechselnd lagenweisen Anordnen der Stahlbleche mindestens jeweils eines der glatten und der gewellten Stahlbleche ganz oder teilweise mit einem Lotauftrag versehen wird. Das Problem des Aufbringens von extrem geringen Mengen Lot wird in dieser Schrift jedoch nicht behandelt.

Aus der GB-A-13 34 683 ist bereits ein Verfahren zum besonders sparsamen Beloten von Werkstücken bekannt, bei welchem auf die Werkstückoberfläche zunächst ein Haftkleber aufgetragen wird, welcher beim späteren bestreuen mit Lot nur eine monopartikulare Schicht von Lötpulver festhält. Bei der Aufgabenstellung dieser Schrift steht im Vordergrund die sparsame Verwendung von Lot, während auf die Probleme beim Löten extrem dünner Bleche mit dem Risiko des Auflegierens und der Bildung von Löchern keinerlei Hinweis enthalten ist.

Aufgabe der vorliegenden Erfindung ist ein Verfahren zur Herstellung einer Trägermatrix für einen Abgaskatalysator, bei dem die Schichtdicke des Lötwerkstoffes begrenzt, insbesondere geringer als die Blechdicke ist, damit ein Auflegieren oder Löcher beim späteren Löten vermieden werden.

Diese Aufgabe wird von dem im Patentanspruch vorgeschlagenen Verfahren gelöst. Ein Haftkleber unterscheidet sich sehr wesentlich von den bisher bei der Herstellung von Trägermatrizen verwendeten flüssigen, leim- oder pastenartigen Lötbindemitteln. Da er nach dem Aufbringen praktisch fest ist und nur an seiner freien Oberfläche die anschließend aufgestäubten Lötpulverkörner bindet und das Lötpulver selbst nicht klebt, kann Lot nur in einer dünnen Schicht einzelner aneinander liegender Körner auf der Oberfläche des Haftklebstoffes haften. Wenn nun erfindungsgemäß diese Lötpulverkörner eine bestimmte Korngröße nicht überschreiten, so ist damit sichergestellt, daß die Lötpulvermenge dosiert und eng begrenzt ist. Damit kann man in Abhängigkeit von der zu verlötenden Blechdicke fast jede gewünschte Lötwerkstoffmenge pro Flächeneinheit aufbringen. Ein eventueller Überschuß an Lötpulver wird durch Blasen und/oder Klopfen entfernt. Wenn nun die miteinander zu verlötenden Flächen aufeinandergepreßt werden, können diese auf Löttemperatur gebracht werden. Dabei verflüchtigt sich zunächst der im allgemeinen aus organischem Material bestehende Haftklebstoff. Da die Flächen aufeinandergepreßt sind, können die Lötpulverkörner sich nicht mehr entfernen und binden bei entsprechender Schmelztemperatur die beiden Blechflächen miteinander.

Der vorgeschlagene Haftklebstoff entspricht beispielsweise den üblichen Haftklebstoffen, wie sie für zahlreiche, im Handel erhältliche Klebefolien oder Klebebänder verwendet werden. Dieser Haftklebstoff kann beispielsweise in einem leicht flüchtigen Lösungsmittel gelöst sein und wird mit an sich bekannten Methoden aufgebracht. Weiterhin besteht die Möglichkeit, diesen Haftklebstoff im heißen Zustand in dünner Schicht aufzutragen. Nach dem Kontakt mit dem kalten Blech wird ein solcher Haftkleber sehr schnell fest und kann anschliessend mit dem Lötpulver bestäubt werden. Außerdem kann man mit bekannten Druckverfahren den Klebstoff örtlich nur dort auftragen wo anschließend gelötet werden soll.

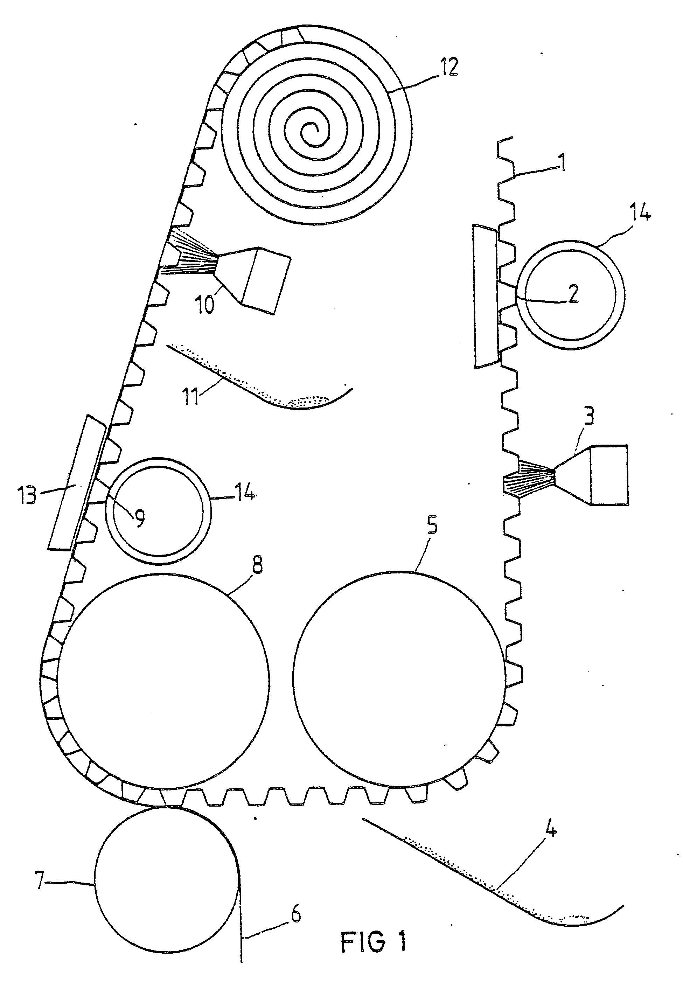

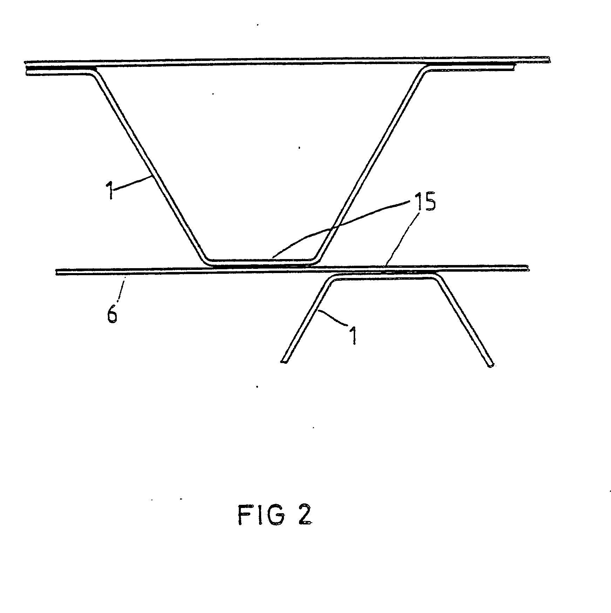

Eine Vorrichtung zur Durchführung des Verfahrens und ein bereits gelöteter Katalysator sind zur Erläuterung der Erfindung in der Zeichnung dargestellt. Figur 1 zeigt in der stark vereinfachter Darstellung eine Vorrichtung zur Durchführung des erfindungsgemäßen Verfahrens. Figur 2 zeigt in stark vergrößerter Darstellung einen Ausschnitt aus einem bereits nach dem erfindungsgemäßen Verfahren gelöteten Katalysator.

In Figur 1 durchläuft ein trapezförmig gewelltes Blech (1) zunächst eine Klebstoffauftragestation (2) und dann eine Sprühvorrichtung (3), wonach das zuviel aufgesprühte Lötpulver in eine Sammelvorrichtung (4) fällt, die unterhalb einer Umlenkrolle (5) angeordnet ist. Danach wird ein weiteres ebenes Blechband (6) über eine Umlenkrolle (7) zugeführt und gemeinsam mit dem gewellten Blechband (1) über eine Umlenkrolle (8) durch eine zweite Klebstoffauftragestation (9) geleitet und anschließend von einer weiteren Sprühvorrichtung (10) mit Lötpulver geschichtet, unter der eine weitere Sammelvorrichtung (11) angeordnet ist, die das zuviel aufgesprühte Lötpulver aufnimmt. Danach wird das gewellte Blechband (1) und das ebene Blechband (6) zusammen zu einem Katalysatorkörper (12) aufgewickelt. Nach Erreichen des gewünschten Außendurchmessers werden die beiden Bänder abgeschnitten, der Körper (12) wird von einer nicht näher beschriebenen Haltevorrichtung zusammengehalten und in einem Hochtemperatur-Vakuumlötofen verlötet. Die beiden Klebstoffauftragestationen (2) und (9) bestehen jeweils aus einer Druckplatte (13) und einer gegenüber angeordneten Klebstoffauftragerolle (14). Die Sprühvorrichtungen (3) und (10) bestehen im wesentlichen aus einer Düse, durch die das Lötpulver pneumatisch aufgesprüht wird. Für das einwandfreie Funktionieren der hier beschriebenen Vorrichtungen sind noch zahlreiche weitere Einzelteile zweckmäßig, deren Beschaffenheit aber dem Fachmann bekannt ist. Klebstoffauftragestationen und Sprühvorrichtungen werden zweckmäßigerweise von geeigneten Hauben umgeben, so daß weder Klebstoff noch Lötpulver die Blechbänder, die übrigen Teile der Vorrichtung oder die Umgebung verschmutzen können. Wenn die zu verlötenden Bleche eine erhebliche Breite aufweisen, ist es zweckmäßig, den Klebstoff in mehreren parallelen Streifen aufzutragen. Zu dem Zweck kann man die gewellten Flächen in der Breite unterbrechen oder den Klebstoff mit geteilten Rollen auftragen.

In Figur 2 ist das trapezförmig gewellte Blechband (1) mit dem ebenen Blechband (6) bereits über die Lötschicht (15) miteinander verbunden.

## Patentanspruch

Verfahren zur Herstellung einer Trägermatrix für einen Abgaskatalysator, welche aus hochtemperaturfesten Stahlblechen gebildet wird, wobei die Stahlbleche als glatte und gewellte Bleche ausgebildet und lagenweise abwechselnd angeordnet sind und wobei vor dem abwechselnd lagenweisen Anordnen der Stahlbleche mindestens jeweils eines der glatten und der gewellten Stahlbleche ganz oder teilweise mit einem Lotauftrag versehen wird, dadurch gekennzeichnet, daß die mit dem Lotauftrag zu versehenden Teile der Stahlbleche zunächst mit einem Haftkleber der bei Löttemperatur rückstandsfrei verdampft, beschichtet werden, auf dessen Oberfläche nach dem Trocknen eine monopartikulare Schicht von trockenem Lötpulver von geringer und bestimmter Korngrösse aufgebracht wird, und daß die Stahlbleche anschließend gewickelt und miteinander verlötet werden.

## Claim

A process for the production of a carrier matrix for an exhaust gas catalyst which matrix is formed from steel plates which are resistant to high temperatures, wherein the steel plates are formed as smooth and corrugated plates and are alternately arranged in layers and wherein before the steel plates are alternately arranged in layers, at least one of the smooth and the corrugated steel plates is in each case wholly or partially provided with a solder coating, characterised in that the parts of the steel plates which are to be provided with the solder coating are first coated with a contact adhesive which evaporates without any residue at soldering temperature and on to the surface of which a mono-particulate layer of dry solder powder of a small and specific grain size is applied after drying ; and that the steel plates are subsequently wound and soldered to one another.

## Revendication

Procédé de fabrication d'une matrice-support, d'un catalyseur pour gaz d'échappement, qui est formée de tôles d'acier résistant à une température élevée, les tôles d'acier étant constituées de tôles lisses et ondulées et étant disposées en couches alternées, au moins l'une des tôles d'acier lisses et ondulées étant munie, avant de les disposer en couches alternées, en tout ou partie, d'un dépôt de brasure, caractérisé en ce qu'il consiste à revêtir les parties des tôles d'acier à munir du dépôt de brasure d'abord d'un produit auto-adhésif qui s'évapore sans laisser de résidus à une température élevée, à déposer sur cette surface, après le séchage, une couche monoparticulaire de poudre à braser sèche ayant une granulométrie faible et déterminée, à enrouler ensuite les tôles d'acier et à les braser les unes aux autres.

FIG 1

FIG 2